# EUROPEAN PATENT SPECIFICATION

(11) **EP 0 406 573 B1**
(45) Date of publication and mention of the grant of the patent: **18.11.1993**
(21) Application number: 90110588.2
(22) Date of filing: 05.06.1990
(51) Int. Cl.: B65G 57/18, B65G 47/248

(54) **Rotary packaging machine**
Verpackungsmaschine mit drehbaren Mitteln
Machine d'emballage équipée de moyens rotatifs

(30) Priority: 07.07.1989 IT 8345289
(43) Date of publication of application: 09.01.1991
(73) Proprietor: DANIELI & C. OFFICINE MECCANICHE S.p.A., 33042 Buttrio (UD) (IT)
(72) Inventor: Poloni, Alfredo, I-34070 Fogliano di Redipuglia (GO) (IT)
(74) Representative: Petraz, Gilberto Luigi

(56) References cited:
- EP-A- 0 099 863
- EP-A- 0 215 996
- DE-B- 1 241 763
- FR-A- 1 421 893
- FR-A- 2 375 121

## Description

This invention concerns a rotary packaging machine. To be more exact, this invention concerns a packaging machine that comprises rotary ring means to overturn layers of profiled sections in order to form a stack of such layers.

The state of the art covers machines to package profiled sections which may be rolled, formed, extruded, etc.

Such packaging machines arrange to prepare the packages with alternate layers, of which one layer is normally overturned so as to bond the package together. EP-A-0099 863, corresponding to the preamble of claim 1, discloses such a machine.

The known packaging machines entail a plurality of drawbacks. A first drawback is that the machines cannot be installed in line directly downstream of the shears, which in turn is placed downstream of the straightening machine.

A second drawback is that the machines cannot package alternate right-way-up and overturned layers either when travelling or when halted.

A third drawback arises from the fact that the machines can handle clearly established ranges of sections and cannot always handle section irons and smooth and/or ribbed round bars equally well.

A further drawback consists in the fact that the binding of the package is not carried out in line.

Moreover, the known systems entail great overall sizes and a large occupied area, high maintenance costs in view of the complexity of the mechanisms, an inability to adapt themselves to the various sections, long times of their working cycle, heavy working costs and considerable installed power.

The present invention according to claim 1 overcomes all the drawbacks of the state of the art and achieves a plurality of advantages.

The invention under examination provides packaging machines which can package in line immediately downstream of the shears.

Furthermore, a packaging machine according to the invention involves:
- modest overall sizes with smaller areas used and smaller volumes taken up;
- much lower running and maintenance costs and, given equal output, a very limited requirement of installed power;
- the ability to adapt itself independently to the various sections and to process also round bars, whether smooth or ribbed;
- much shorter times of the working cycle as the working steps take place in sequence.

A rotary packaging machine according to the invention is set forth and characterized in the main claim, while the dependent claims describe variants of the idea of the original solution.

According to the invention the rotary packaging machine of the invention is installed in a production line.

According to the invention, if it is necessary to provide for alternate right-way-up and overturned layers, the sections are already in the form of a double layer when they reach the packaging machine, that is to say, the two layers arrive together, namely a right-way-up layer in a number of "N" sections and a layer to be overturned in a number of "N-1" or "N+1" sections.

The two layers reach the packaging machine side by side but distanced laterally and reciprocally butted.

The pre-arrangement of the layers can take place downstream of the cooling plate and the butting can be carried out in any known way, even downstream of the multiple straightening machine through the effect of a suitable shears.

One of the two layers is already positioned in a vertical direction in relation to the package being formed when that layer reaches the packaging machine.

The other layer, which is the one to be overturned, arrives alongside the first layer and is engaged by arms secured to a rotary circular sector, which contains the layer and the package being formed.

Each of the rotary sectors rotates in coordination with the other rotary sectors in a direction at a right angle to the axis of the sections.

The arms which support and convey the sections are oriented towards the centre of the rotary sector and are positioned substantially horizontally, are able to move when required and can be withdrawn from their working position, for instance by swinging sideways on their supporting pivot.

The arms normally serve to place an overturned layer on the package being formed.

The package being formed is supported on vertically movable arms able to displace the package vertically step by step as required and to deliver it, when formed, to a lower roller removal conveyor.

The right-way-up layer is placed on the package by the thrust applied by the straightening machine.

According to a variant the right-way-up layer is positioned by the action of retractable rollers located between the package and the plane of arrival of the layer.

According to another variant the right-way-up layer is positioned by the action of overlying rollers acting by pressure or magnetically on the upper layer in the package.

According to a further variant the right-way-up layer is engaged by auxiliary withdrawable arms and positioned lengthwise thereby. These auxiliary withdrawable arms may also be similar to and counterparts of the arms which position and overturn the layer to be turned upside down.

As we said above, the layer to be overturned is positioned and deposited by the arms which are rotated by the action of the rotary sector.

The arms which cooperate thus with the rotary sector may be of an axially movable shaft type or of a type operating by magnetic anchorage and able to move sideways or axially.

In view of its modest dimensions the invention can be readily soundproofed and protected.

The attached figures, which are given as a non-restrictive example, show the following:-
- Fig.1: is a simplified diagram of the invention installed in a rolling line;
- Figs.2: show two working moments;

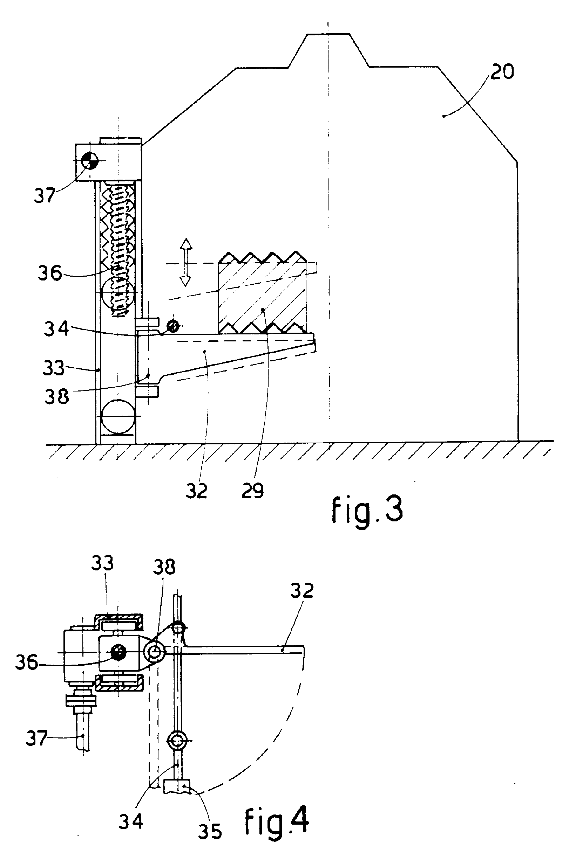

- Fig.3: shows the working of possible arms to bear a package;
- Fig.4: shows the actuation of the arms of Fig.3.

A rotary packaging machine 10 according to the invention can be installed readily in the finishing zone of a rolling plant so as to organize the cycle and the lay-out rationally.

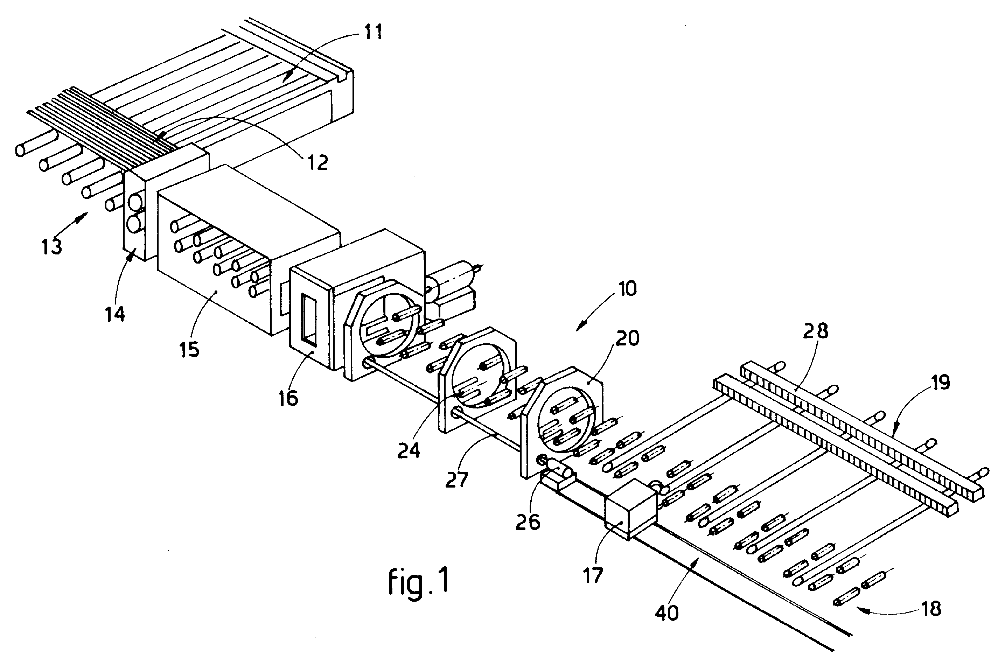

Fig.1 shows a possible lay-out organized in a rational manner.

A rolled section reaches a plate 11 where an area 12 for the formation of layers of sections has been provided. The layer or layers are traversed from the area 12 onto a feeder conveyor 13.

The invention makes possible the handling of sections which have to be packaged in alternate right-way-up layers and overturned layers, and of section which have to be packaged without any anchorage between the layers.

In the area 12, therefore, there may be pre-arranged in relation to the characteristics of the sections and of the package:
- either one layer alone,
- or two equal layers positioned parallel and side by side but distanced sideways from each other,
- or two parallel layers side by side, of which one is already correctly oriented whereas the other has to be overturned.

The feeder conveyor 13 delivers the layer or layers side by side to a drawing means 14, which feeds them to a multiple straightening machine 15.

The layer or layers side by side are sent from the multiple straightening machine 15 to a shears 16, which may be of any type and shears the layer or layers to size.

Hereafter we shall deal with the case of layers 30-31 side by side, of which one 31 has to be overturned so as to be bound to the preceding and successive layers 30.

A formed package 29 moves axially from the rotary packaging machine 10 on a roller removal conveyor 18 to a binding area 40 which includes one or more binding machines. In the case shown in Fig.1 there is a binding machine 17 on wheels.

The bound packages 28 pass from the binding area 40 to a weighing machine and then to a stock of bound packages 19.

The two layers, namely that 30 consisting of "N" sections which will remain the right way up and that 31 consisting in this case of "N-1" sections which has to be overturned so as to be bound to the preceding and successive layers deposited 30, reach the rotary packaging machine 10 at the same time, side by side and distanced sideways according to requirements.

The sheared layer 31 to be overturned is clamped by arms 24a and 24b actuated by devices 25a and is rotated by 180° to bring it above the right-way-up layer 30.

The layer 31 now overturned is rested on the previous layer 30 already positioned the right way up, since the overturned layer 31 is freed of the supporting action of the arms 24 owing to the coordinated and progressive rotation of the arms 24a and 24b about their support pivot 39 by an actuator 25b.

The first layers 30 and 31 forming the first two layers of the package 29 being formed arrive on the roller conveyors 18 and 22 respectively.

The successive layers 30 and 31 arrive above the package 29 being formed and the roller conveyor 22 respectively.

When the arms 24 borne on the circular sector 21 lodged in a housing 20 have delivered the overturned layer 31 to the package 29 being formed, they return in the reverse direction or continue their progress to their starting position and are prepared for a new layer to be overturned 31 which is arriving or has already arrived.

At this point they rotate into position, ready for work, and engage a layer 31 to be overturned in a new cycle.

Instead of the arms 24a, upper and lower rollers, magnetized or not, or else axially movable shafts may be provided.

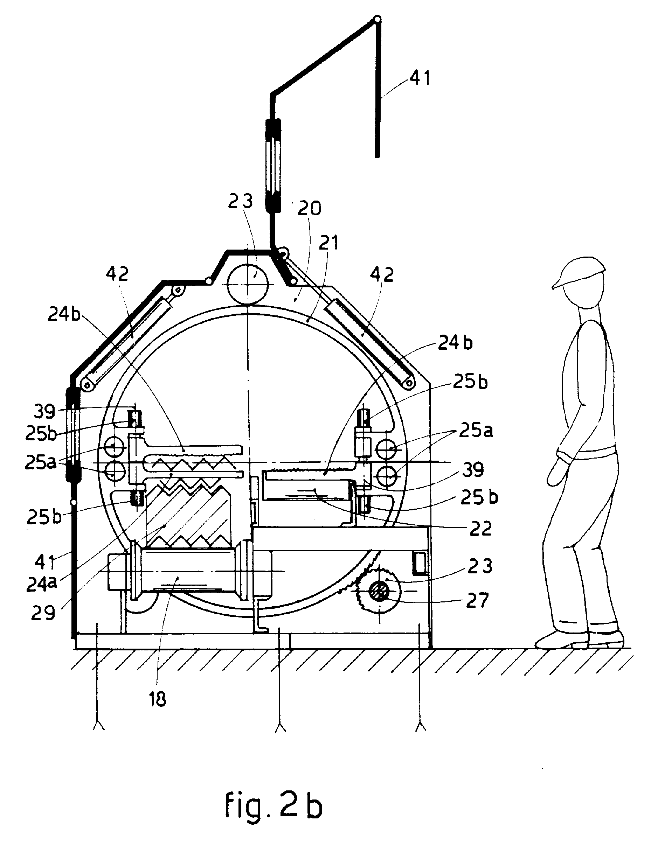

The upper arms 24a may be rendered non-operational as in Fig.2b.

The layer 31 to be overturned arrives on the roller conveyor 22 alongside the layer 30 already the right way up and advantageously at the same time.

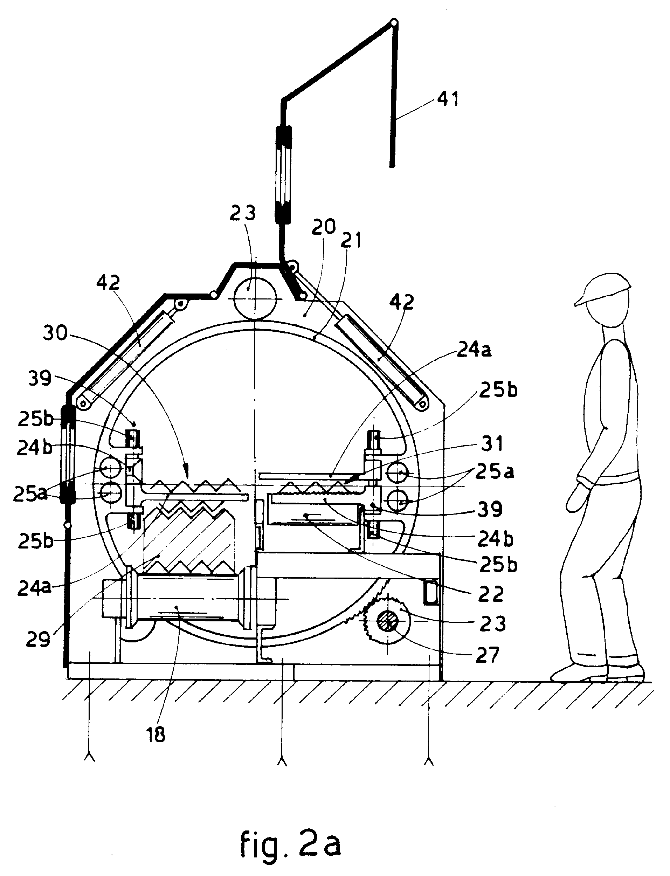

The layer 31 arrives on the roller conveyor 22 and positions itself between the upper and lower arms 24a and 24b (see Fig.2a) or else the arms 24 position themselves on each side of the layer 31. As we said above, the arms 24 can move along their pivot 39 and can therefore clamp the layer 31.

When the layer 31 to be overturned has been clamped and the arms 24 holding that layer are rotated, the circular sector 21 rotates by 180° and places the overturned layer 31 on the previous layer 30 present in the package 29 being formed.

The circular sector 21 is rotated by motive wheels 23 driven by a shaft 27 set in rotation by a motor 26 (Fig.1).

The overturned layer 31 is deposited by withdrawal of the arms 24 rotated about their pivot 39. Having deposited the layer 31, the arms 24a and 24b return to their position as soon as a support arm 32 has lowered the package 29 by a correct value.

When the arms 24a and 24b have returned to their position and (Fig.2a) are prepared for a new layer 31 to be overturned, the next idential layers 30 and 31 are fed and the cycle is repeated.

In this case the support arms 32 supporting the package 29 are borne on a guide column 33 and can move laterally on their vertical supporting pivot 38.

The positioning of the support arms 32 is carried out by an actuation bar 34 driven by an actuation motor 35.

The vertical positioning of the support arms 32 supporting the package is determined by vertical movement assemblies 36 connected by an assembly actuation bar 37.

When the package 29 is completed, the support arms 32 deposit it on the roller removal conveyor 18, are withdrawn laterally, rise again and are repositioned, while the package 29 is discharged axially.

The packaging machine according to the invention can be easily soundproofed with a movable screen 41, which performs not only safety functions but also the tasks of damping and containing noises.

When work is in progress, the screen 41 is raised by jacks 42 so as not to create an obstruction.

## Claims

1. Rotary packaging machine suitable to stack profiled sections either in normal layers or in alternate right-way-up/overturned layers (30-31), which is fed with layers of such sections and is characterized in that it comprises a plurality of housings (20) each with a rotary sector (21) which rotates in a plane subsantially at a right angle to the stacked sections (29), the sectors (21) including at least one pair of arms (24) which handle a layer and are retractable from it.

2. Rotary packaging machine (10) as claimed in Claim 1, in which the arms (24) handling a layer take up a first layer-engagement position and a second position for delivery of the overturned layer, such positions being located at about 180° from each other along a circumference.

3. Rotary packaging machine (10) as claimed in Claim 2, in which the first layer-engagement position of the layer-handling arms (24) cooperates with a roller conveyor (22) that conveys layers to be overturned (31).

4. Rotary packaging machine (10) as claimed in claim 2 or 3, in which the second position of the arms (24) for delivery of the overturned layer (31) is correlated directly with the stack being formed (29).

5. Rotary packaging machine (10) as claimed in claim 2, 3 or 4, in which the second position of the arms (24) for delivery of the overturned layer (31) cooperates with movable, vertically positionable support arms (32) that support the stack (29).

6. Rotary packaging machine (10) as claimed in claim 5, in which the support arms (32) that support the stack (29) cooperate at the lower end of their travel with a stack-removal roller conveyor (18).

7. Rotary packaging machine (10) as claimed in claim 6, in which the upper edge of the stack-removal roller conveyor (18) and the roller conveyor (22) that conveys layers (31) to be overturned are contained within the free circumference of the rotary sector (21).

8. Rotary packaging machine (10) as claimed in any claim hereinbefore, in which the layer-handling arms (24) extend within the rotary sector (21) substantially towards the centre of rotation of the same (21).

9. Rotary packaging machine (10) as claimed in any claim hereinbefore, which is located immediately downstream of a shears (16) that shears sections to size.

10. Rotary packaging machine (10) as claimed in any claim hereinbefore, in which a layer positioned the right way up (30) arrives already arranged to be stacked from the shears (16) that shears to size.

11. Rotary packaging machine (10) as claimed in any claim hereinbefore, which is protected by a movable soundproofing screen (41).

## Patentansprüche

1. Rotationsverpackungsmaschine zum Stapeln von Profilen in gewöhnlichen Lagen oder in abwechselnden, nach oben zeigenden umgedrehten Lagen (30-31), welcher Lagen solcher Profile zugeführt werden und die dadurch gekennzeichnet ist, daß sie eine Anzahl von Rahmen (20) besitzt, je mit einem drehbaren Abschnitt (21), der in einer Ebene rotiert, die im wesentlichen rechtwinklig zu den gestapelten Profilen (29) verläuft, wobei die Abschnitte (21) zumindest ein Paar von Armen (24) aufweisen, die eine Lage erfassen und von ihr zurückziehbar sind.

2. Rotationsverpackungsmaschine (10) nach Anspruch 1, bei welcher die eine Lage erfassenden Arme (24) eine erste, lagenerfassende Position und eine zweite Position zum Abgeben der umgedrehten Lage einnehmen, wobei solche Lagen gegeneinander längs eines Kreisbogens um 180° gegeneinander versetzt sind.

3. Rotationsverpackungsmaschine (10) nach Anspruch 2, bei welcher die erste, lagenerfassende Position der Arme (24) mit einem Walzenförderer (22) zusammenwirkt, welcher die umzudrehenden (31) Lagen fördert.

4. Rotationsverpackungsmaschine (10) nach Anspruch 2 oder 3, bei welcher die zweite, zum Abgeben der umgedrehten Lagen (31) dienende Position der Arme (24) in direkter Wechselbeziehung mit dem zu bildenden Stapel (29) steht.

5. Rotationsverpackungsmaschine (10) nach Anspruch 2, 3 oder 4, bei welcher die zweite, zum Abgeben der umgedrehten Lagen (31) dienende Position der Arme (24) mit bewegbaren Stützarmen (32) zusammenwirkt, die vertikal positionierbar sind und den Stapel (29) tragen.

6. Rotationsverpackungsmaschine nach Anspruch 5, bei welchen die den Stapel (29) tragenden Stützarme (32) am unteren Ende ihres Weges mit einem Walzenförderer (18) zum Abführen der Stapel zusammenwirken.

7. Rotationsverpackungsmaschine (10) nach Anspruch 6, bei welchen der obere Rand des Walzenförderers (18) zum Abführen der Stapel sowie der Walzenförderer (22), der die umzudrehenden Lagen (31) fördert, innerhalb des freien Umfanges des drehbaren Abschnittes (21) enthalten sind.

8. Rotationsverpackungsmaschine (10) nach einem der vorgehenden Ansprüche, bei welcher sich die eine Lage erfassenden Arme (24) innerhalb des drehbaren Abschnitts (21) im wesentlichen in Richtung dessen Rotationszentrums (21) erstrecken.

9. Rotationsverpackungsmaschine (10) nach einem der vorgehenden Ansprüche, welche unmittelbar stromab einer Schere (16) angeordnet ist, welche Profile auf Größe schneidet.

10. Rotationsverpackungsmaschine (10) nach einem der vorgehenden Ansprüche, bei welcher eine nach oben zeigende Lage (30) bereits zum Stapeln bereit von der Schere (16) einlangt, die auf Größe schneidet.

11. Rotationsverpackungsmaschine (10) nach einem der vorgehenden Ansprüche, die durch einen bewegbaren, schalldämpfenden Schirm (41) abgeschirmt ist.

## Revendications

1. Machine d'emballage (10) équipée de moyens rotatifs, convenant pour empiler des éléments profilés soit en couches normales, soit de couches alternées à l'endroit/à l'envers (30-31), qui est alimentée de couches de ces éléments et est caractérisée en ce qu'elle comprend une pluralité de cages 20 comprenant chacune un secteur tournant 21 qui tourne dans un plan en substance perpendiculaire aux éléments empilés (29), les secteurs (21) comprenant au moins une paire de bras (24) qui manipulent une couche et sont rétractables à l'écart de celle-ci.

2. Machine d'emballage (10) équipée de moyens rotatifs suivant la revendication 1, dans laquelle les bras (24) manipulant une couche prennent une première position d'engagement de la couche et une deuxième position de dépôt de la couche retournée, ces positions étant situées à environ 180° l'une de l'autre sur une circonférence.

3. Machine d'emballage (10) équipée de moyens rotatifs suivant la revendication 2, dans laquelle la première position d'engagement de couche des bras de manipulation de couche (24) est liée à celle d'un transporteur à rouleaux (22) qui transporte les couches à retourner (31).

4. Machine d'emballage (10) équipée de moyens rotatifs suivant la revendication 2 ou 3, dans laquelle la deuxième position des bras (24) pour le dépôt de la couche retournée (31) est liée directement à celle de la pile (29) en cours de formation.

5. Machine d'emballage (10) équipée de moyens rotatifs suivant la revendication 2, 3 ou 4, dans laquelle la deuxième position des bras (24) pour le dépôt de la couche retournée (31) est liée à celle de bras de support (32) mobiles et positionnables dans le sens vertical, qui supportent le paquet (29).

6. Machine d'emballage (10) équipée de moyens rotatifs suivant la revendication 5, dans laquelle les bras de support (32) qui supportent la pile (29) coopèrent à l'extrémité inférieure de leur parcours avec un transporteur à rouleaux (18) d'évacuation de la pile.

7. Machine d'emballage (10) équipée de moyens rotatifs suivant la revendication 6, dans laquelle le bord supérieur du transporteur à rouleaux (18) d'évacuation de la pile et le transporteur à rouleaux (22) qui transporte les couches (31) à retourner sont contenus dans le périmètre libre du secteur tournant (21).

8. Machine d'emballage (10) équipée de moyens rotatifs suivant l'une quelconque des revendications précédentes, dans laquelle les bras (24) de manipulation de couche s'étendent à l'intérieur du secteur tournant (21) en substance vers le centre de rotation de celui-ci (21).

9. Machine d'emballage (10) équipée de moyens rotatifs suivant l'une quelconque des revendications précédentes, qui est située immédiatement en aval d'une cisaille (16) qui cisaille les éléments à longueur.

10. Machine d'emballage (10) équipée de moyens rotatifs suivant l'une quelconque des revendications précédentes, dans laquelle une couche positionnée à l'endroit arrive de la cisaille (16), qui la coupe à longueur, déjà rangée pour être empilée.

11. Machine d'emballage (10) équipée de moyens rotatifs suivant l'une quelconque des revendications précédentes, qui est protégée par un écran (41) insonorisant mobile.
